# EUROPÄISCHE PATENTANMELDUNG

(11) **EP 0 846 544 A1**
(43) Veröffentlichungstag der Anmeldung: **10.06.1998**
(21) Anmeldenummer: 96119356.2
(22) Anmeldetag: 03.12.1996
(51) Int. Cl.: B29C 49/42

(54) **Blasmaschine mit Transportvorrichtung, die auch den Abstand zwischen den Vorformen ändert**

(71) Anmelder: BEKUM Maschinenfabriken GmbH, D-12107 Berlin (DE)
(72) Erfinder: Roos, Uwe, 29389 Bodenteich (DE); Mehnert, Gottfried, 14195 Berlin (DE); Gittner, Franz, 29574 Soltendieck (DE)
(74) Vertreter: Huss, Carl-Hans, Dipl.-Ing.

(57) **Zusammenfassung**

Um bei einer Reheat-Blasmaschine mit getrennter Heiz- und Blasstrecke die Vorformlinge auf der sie auf Blastemperatur bringenden Strecke in engem, von der Teilung der Formnester auf der Blasstrecke unabhängigem Abstand an den Heizorganen vorbeiführen zu können, und um auf der Blasstrecke gleichzeitig mehrere Vorformlinge aufblasen zu können, schlägt die Erfindung eine geradlinige Heizstrecke (1) und mindestens eine geradlinige Blasstrecke (7) vor, und daß das Transportorgan (2) für die Vorformlingsaufnahme in enger Teilung derart seitlich abstehende Arme (4) aufweist, daß der Umlenkradius (r) des Transportorgans (2) der Heizstrecke (1) kleiner als der Umlenkradius (R) der Dornaufnahmen ist, und daß zwischen einem Umlenkabschnitt der Heizstrecke (1) und dem diesen zugewandten Abschnitt der Blasstrecke (7) mindestens ein Übergabeorgan (11) geschaltet und so gesteuert ist, daß es die Vorformline ergreift und auf der Blasstrecke absetzt, wenn diese auf dem Umlenkabschnitt der Heizstrecke (1) voneinander einen dem Abstand der Blasformnester auf der Blas- strecke (7) entsprechenden Abstand aufweisen.

## Beschreibung

Die Erfindung richtet sich auf die Herstellung von Hohlkörpern aus Kunststoff im Blasverfahren einer besonderen Art, bei der im Spritzverfahren hergestellte Vorformlinge einem Vorrat entnommen und in einer Heizstrecke auf Blastemperatur erwärmt und anschließend in eine oder mehrere Blasformen überführt werden, in der oder denen sie zu Hohlkörpern einer durch das Formnest der Blasform vorgegebenen Gestalt und Größe aufgeblasen, anschließend gekühlt und danach entnommen werden. Ein solches Verfahren, bei dem einem Vorrat entnommene kalte Vorformlinge bis auf die Blastemperatur wieder erwärmt werden, wird meist "Reheat-Verfahren" genannt.

Damit die einzelnen Vorformlinge sowohl über ihre Länge als vor allem auch über ihren Querschnitt gleichmäßig bis auf Blastemperatur erwärmt werden können, und weil die Erwärmung nur verhältnismäßig langsam den Querschnitt durchdringt, durchlaufen die Vorformlinge hierzu meist eine längere Heizstrecke auf einer geraden oder kreisförmigen Bahn, auf der im Abstand voneinander Heizaggregate, meist Infrarotstrahler, angeordnet sind, wobei die Streckenabschnitte zwischen den Heizaggregaten sogenannte Ausgleichs- oder Kühlabschnitte sind, in denen die von außen auf die Vorformlinge aufgebrachte Wärme Zeit hat, durch den Querschnitt zu dringen. Außerdem sollen diese Abschnitte gewährleisten, daß die Außenwand des Vorformlings nicht überhitzt wird, was bei vielen hinsichtlich des sogenannten Prozeßfensters empfindlichen Kunststoffen leicht der Fall ist.

Dieses System bringt im allgemeinen keine Schwierigkeiten, wenn nach dem Durchlauf der Heizstrecke jeweils nur ein Vorformling in eine Blasform übergeben wird (z.B. EP 0 387 734 A1). Wenn dagegen zur Vergrößerung des Ausstoßes und damit der Wirtschaftlichkeit einer Reheat-Anlage am Ende einer Heizstrecke Vorformlinge in mehrere, auf einer besonderen Blasstrecke angeordnete Blasformen übergeben sollen, entsteht die Schwierigkeit, daß wegen einer guten Ausnutzung der emitierten Strahlung die Vorformlinge die Heizstrecke in verhältnismäßig enger Teilung durchlaufen sollen, während die Teilung der Kavitäten der Blasformen dem Volumen der aufgeblasenen Hohlkörper und damit auch der Größe der Blasformen mit ihren Kavitäten oder Formnestern und Kühlkanälen angepaßt sein muß, d.h. die Vorformlinge sollen die Heizstrecke in verhältnismäßig enger Teilung durchlaufen, während auf der Blasstrecke die Blasformkavitäten in einer demgegenüber größeren Teilung angebracht sein müssen.

Die DE 31 30 129 A1 schildert dieses Problem und schlägt als Lösung ein zwischen am Außenumfang fest angeordneten Heizkästen umlaufendes Heizrad mit enger Teilung für die Vorformlinge bzw. die diese aufnehmenden Haltedorne vor, von dem sie durch ein Übergaberad auf ein Blasrad abgegeben werden, auf dem die Blasformen in einer der Größe dieser Formen angepaßten Teilung angeordnet sind. Die Übergabe ist bei dem Vorschlag nach der DE 31 30 129 A1 deshalb möglich, weil aus dem Vorrat zunächst nicht jeder Haltedorn mit einem Vorformling bestückt wird, sondern z.B. nur der erste, dritte, fünfte, siebte... und danach nach einem vollen Umlauf des Heizrades jeder zweite, vierte, sechste, achte... Haltedorn und entsprechend wird ein Vorformling erst nach zweimaligem Umlauf in eine Blasform übergeführt. Da gleichzeitig auf jede durch Überabe auf das Blasrad frei werdende Position auf dem Heizrad ein neuer Vorformling aufgesetzt wird, der nach zweimaligem Umlauf in eine Blasform auf dem Blasrad übergeben wird, arbeitet diese Maschine kontinuierlich, und da in fortlaufender Reihenfolge immer nur jeder zweite Vorformling vom Heizrad auf das Blasrad übergeben wird, kann die Teilung auf dem Blasrad doppelt so groß wie die auf dem Heizrad sein. Natürlich kann nach dieser Methode z.B. jeder Vorformling die Heizstrecke auch dreimal durchlaufen, ehe er auf das Blasrad übergeben wird und entsprechend die Blasformteilung eingerichtet werden.

Dieses Verfahren hat aber u.a. den Nachteil, daß auch bei diesem System nacheinander immer nur eine Blasform mit einer Kavität mit einem Vorformling gefüllt werden kann und ferner, daß jeder Vorformling bis zur Abnahme vom Heizrad und Übergabe auf das Blasrad mindestens zwei Umdrehungen des Heizrades mit der Folge durchlaufen muß, daß die Heizstrecke aus zwei gleichen Abschnitten besteht, so daß für die Erwärmung auf Blastemperatur keine Möglichkeit der anpassenden Veränderung der Heizbedingung und Ausgleichs- und/oder Kühlabschnitte zwischen den Heizorganen in dem zweiten Umlauf gegenüber dem ersten besteht.

Außerdem benötigt eine nach diesem bekannten System arbeitende Maschine für gleiche Stückleistung merkbar mehr Platz.

Demnach lag der Erfindung die Aufgabe zugrunde, eine Reheat-Blasmaschine zu schaffen, mit der nicht nur die Vorformlinge in enger Teilung auf der Heizstrecke an den Heizabschnitten und den dazwischen liegenden Ausgleichs- und/oder Kühlabschnitten vorbeigeführt werden können, während die Blasform- oder Blasformnestteilung auf der Blasstrecke von der Teilung der Vorformlinge auf der Heizstrecke unabhängig ist, sondern mit der auch auf der Blasstrecke mehrere Blasformen oder eine oder mehrere Blasformen mit mehreren Formnestern gleichzeitig mit Vorformlingen bestückt werden können, die gleichzeitig zu Hohlkörpern ausgeblasen werden können. Diese Aufgabe löst die Erfindung mit den im Patentanspruch 1 definierten Mitteln. Die Unteransprüche haben zweckmäßige Ausgestaltungen des Erfindungsgedankens zum Gegenstand. Die Erfindung ist in den Zeichnungen an einem Ausführungsbeispiel dargestellt und anhand derselben beschrieben. Es zeigen:
- Fig. 1: eine Teilaufsicht auf eine Blasmaschine nach der Erfindung unter Weglassung einiger nicht zur Erfindung gehörender Einrichtungen, wie z.B. Getriebe und Schaltschränke;
- Fig. 2: einen Ausschnitt aus der Fig. 1 in einem gegenüber dieser Fig. vergrößerten Maßstab;
- Fig. 3: ein Taktzeitdiagramm.

Mit 1 ist allgemein eine Heizstrecke bezeichnet, in der ein Endlos-Förderorgan, z.B. eine Kette 2, über Umlenkrollen 3, 3' läuft. Die Kette 2 trägt nach außen abstehende Arme 4, von denen nur einige eingezeichnet sind. Die Enden der Arme 4 sind als Vorformlingshalterung, z.B. in Form während des Vorschubs in Rotation versetzter Haltedorne, ausgebildet. Auf jeden Haltedorn 5 kann ein einem Vorrat 1' entnommener Vorformling aufgesteckt werden. 6, 6', 6''...6ⁿ sind längs der Heizstrecke im Abstand voneinander angeordnete Heizeinrichtungen, z.B. Infrarotstrahler, deren Strahlung die auf den Dornen 5 aufgesteckten Vorformlinge von außen erwärmt. In der Zeichnung sind nur längs eines Trums des Förderorgans 2 angeordnete Heizeinrichtungen bezeichnet, aber diese können nach der Darstellung auch neben dem Vor- und dem Rücklauf der Kette 2 liegen.

Jeder Heizstrecke ist mindestens eine, allgemein mit 7 bezeichnete Blasstrecke zugeordnet, in der im dargestellten Fall eine Blaseinrichtung 8 mit Blasform 8' mit jeweils z.B. vier Kavitäten oder Formnestern angeordnet ist. Zu einer Blasstrecke 7 gehört ferner eine um Umlenkketenräder 9,9' in Pfeilrichtung umlaufende Kette 10, von der die ausgeblasenen Hohlkörper abgenommen werden. Im Fall der dargestellten Maschine arbeitet eine Heizstrecke 1 auf zwei Blasstrecken 7,7a, wobei letztere mit einer der Blaseinrichtung 8 gleichen Blaseinrichtung 8a sowie Umlenkrädern 9a,9a' und einer um die Räder 9a,9a' umlaufenden Kette 10a ausgerüstet ist.

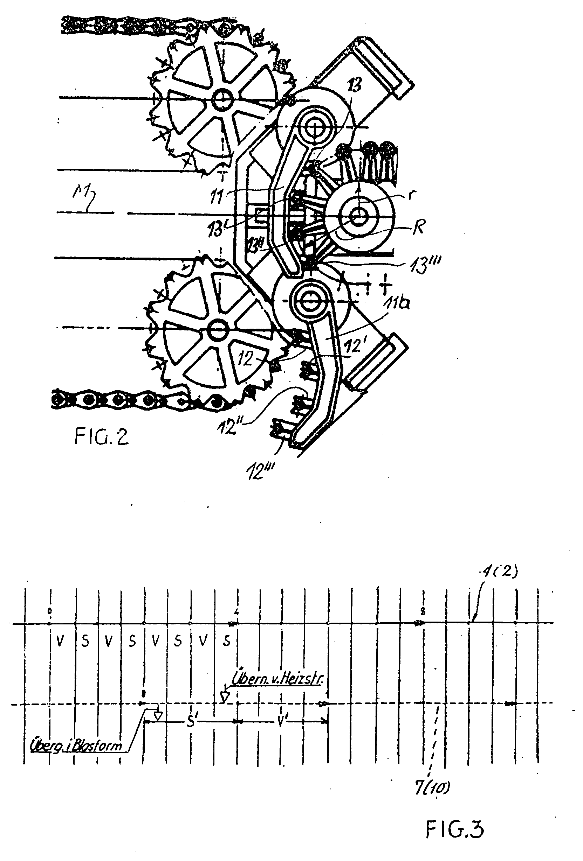

Zwischen das in der Zeichnung linke Ende der Heizstrecke 1 und den in der Zeichnung rechten Beginn der Blasstrecken 7,7a, d.h. zwischen das Umlenkrad 3 der Heizstrecke 1 und die Umlenkräder 9, 9a der Blasstrecke 7 -vergrößert in Fig. 2 veranschaulicht- sind Übergabeorgane 11,11a geschaltet, die gesteuert die auf Blastemperatur erwärmten Vorformline von dem Umlenkabschnitt der Heizstrecke abnehmen und auf die Kette 10 der Blasstrecke bzw. Ketten 10,10a der Blasstrecken 7,7a aufsetzen. Diese Übergabeorgane 11, 11a sind so beschaffen, daß sie auf der Heizstrecke jeweils mehrere, z.B. gemäß der Darstellung einen Satz von vier Vorformlingen gleichzeitig ergreifen, von ihren Haltedornen abnehmen und über die Ketten 10,10a der Blasstrecke(n) schwenken. Hierzu können z.B. auf den dargestellten hebelförmigen Obergabeorganen 11 mechanisch oder pneumatisch (Unterdruck) arbeitende Greifer 12 vorgesehen sein.

Wie die Zeichnungen veranschaulichen, ergreift das eine Übergabeorgan, z.B. Übergabeorgan 11, mit seinen Greifern, z.B. Greifern 12, 12', 12'', 12''', einen Satz von mehreren Vorformlingen, z.B. vier Vorformlinge 13,13',13'',13''', immer dann, wenn diese sich in gleichen Abständen in der Umlenkposition auf dem Umlenkrad 3 der Heizstrecke 1 befinden. In dieser Position, wenn das Förderorgan 2 durch das Umlenkrad 3 umgelenkt wird, vergrößert sich die Teilung zwischen den Vorformlingen 13 bzw. deren Haltedornen, weil der Förderorgan-Umlenkradius r des Rades 3 kleiner als der Radius R ist, den der Kreisbogen durch die Mittelachsen der auf die Enden der Arme 4 aufgesteckten Vorformlinge beschreibt. D.h. sowie die vorbestimmte Zahl von Vorformlingen auf ihren Armen 4 auf das Umlenkrad gelangt ist und alle, z.B. jeweils vier Vorformlinge, einen sich über einen durch die Mittelebene M gleich geteilten Winkel auf dem Umlenkrad 3 einnehmen, werden die Vorformlinge aus der Heizstrecke auf die Blasstrecke übergeben, wenn die Länge der Arme 4 und damit der Umlenkradius der Vorformlinge so bemessen ist, daß bei Erreichen der Abnahmeposition der Vorformlingsabstand gleich der Teilung der Formen oder Formnester in der Blasform oder den Blasformen ist.

Dabei wird zweckmäßig das Förderorgan 2 taktweise in Pfeilrichtung bewegt, d.h. auf jeden Vorschub folgt eine Stillstandszeit. Die Vorschub- und Stillstandszeiten in der Heizstrecke können z.B. jeweils 0,2 s betragen.

Die Vorformlinge werden also von dem Übergabeorgan 11 in einem Abstand voneinander von dem Förderorgan 2 abgenommen und auf die Kette 10 der Blasstrecke 7 übergeben, der mit dem Abstand der Blasformnester in einer oder mehrere nebeneinander angeordneten Blasformen übereinstimmt.

Auch das Förderorgan der Blasstrecke, z.B. Kette 10, wird getaktet bewegt, und die Vorformlinge werden von dem Förderorgan 2 auf das Förderorgan 10 dann übergeben, wenn beide gleichzeitig oder fast gleichzeitig eine Stillstandszeit haben. Die Vorschubs- und Stillstandszeiten der Kette 10 können aber, da sie unabhängig von der der Heizstrecke sind, innerhalb gewisser Grenzen variiert und der Blaszykluszeit, d.h. der Zeit angepaßt werden, die für die Beschikkung einer Blasform mit einem oder mehreren Vorformlingen bis zur Entnahme der ausgeblasenen Hohlkörper benötigt wird. Hierfür steht genügend Zeit zur Verfügung, weil nach jedem Ergreifen von z.B. vier Vorformlingen bei einer Vorschubs- und Stillstandszeit von je 0,2 s in der Heizstrecke 0,2 s x 4 Vorschub + 0,2 s x 4 Stillstand = 1,6 s Zeit verstreicht, bis wieder vier zu ergreifende Vorformlinge auf dem Abschnitt des Umlenkrades 3 für die Abnahme und die natürlich auch eine gewisse, wenn auch kurze Zeit, benötigende Verschwenkung der Übergabeorgane zur Verfügung stehen. Dieses Verhältnis verbessert sich noch zugunsten einer längeren Zeitspanne für das Erfassen der Vorformlinge und ihre Übergabe sowie ihre Bearbeitung in der Blasstrecke, wenn gemäß der Darstellung eine Heizstrecke 1 auf zwei Blasstrecken 7,7a arbeitet, weil dann z.B. das Übergabeorgan 11 nach der Übergabe der Vorformlinge auf die Kette 10 nicht die nächsten vier auf die Umlenkung vorgetakteten Vorformlinge, sondern erst die übernächsten vier Vorformlinge ergreift; die vorgenannten, nach der Übergabe vorgetakteten Vorformlinge werden von dem Übergabeorgan 11a ergriffen und auf die Blasstrecke 7a gebracht.

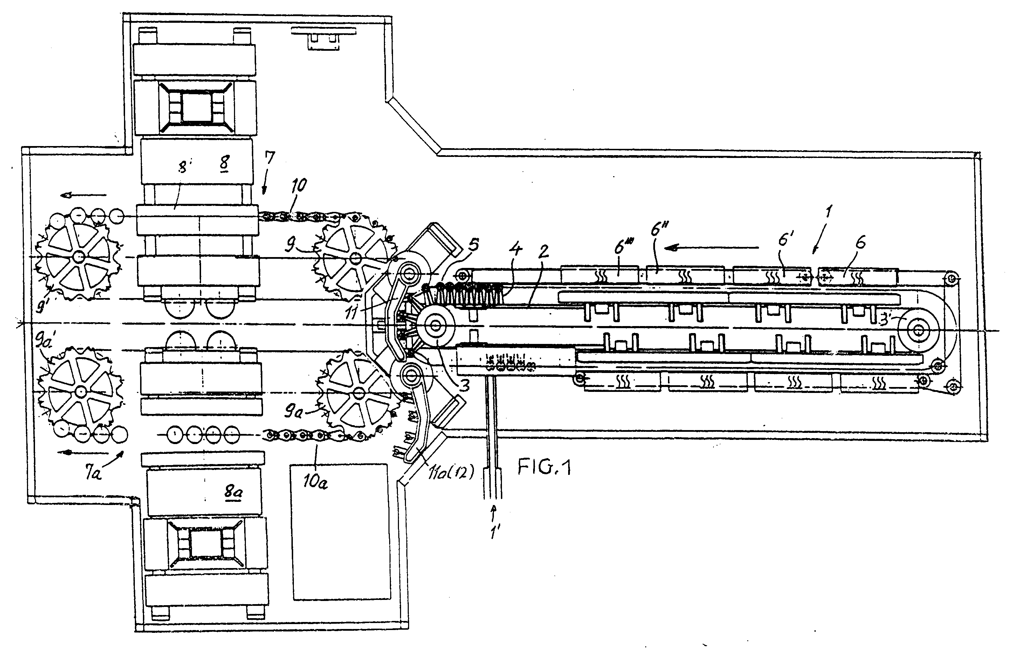

Bei dem dargestellten Beispiel beträgt also das Taktverhältnis 4 : 1, wenn ein Takt aus einer Vorschub- und einer Stillstandszeit besteht. D.h. in der gleichen Zeit, in der auf der Heizstrecke 1 vier Takte durchlaufen werden, wird auf der Blasstrecke ein Takt durchlaufen. Das Diagramm nach Fig. 3 versucht dies erläutern, wobei davon ausgegangen wird, was aber nicht zwingend ist, daß auch auf der Blasstrecke ein Takt in zwei gleichlange Abschnitte Vorschub- und Stillstandszeit aufgeteilt ist. Man erkennt, daß in der Heizstrecke 1 vier aus Vorschub (V) und Stillstand (S) bestehende Takte benötigt werden, um vier Vorformlinge auf dem Umlenkabschnitt in die Position für die Übergabe auf die Blasstrecke zu bringen. Wichtig ist, daß sich der Stillstand (S) des Förderorgans 2 der Heizstrecke 1 und der Stillstand (S') der Kette 10 der Blasstrecke 7 soweit überlappen, daß beide gleichzeitig eine Stillstandszeit haben, wobei aber die Stillstandszeit der Kette 10 länger als die des Förderorgans 2 sein kann. Während der Stillstandszeit der Kette 10 werden nämlich nicht nur die in der Heizstrecke bereit stehenden Vorformlinge, im dargestellten Fall vier Vorformlinge, von dieser abenommen und auf der Kette 10 abgesetzt, sondern vier zwischen den geöffneten Blasformteilen stehende Vorformlinge von der sich schließenden Form ergriffen, aufgeblasen, gekühlt und danach als ausgeblasene Hohlkörper aus der Form entfernt. Das Förderorgan 2 der Heizstrecke 1 könnte sogar bereits weitergetaktet werden, nachdem ein Übergabeorgan abgehoben hat, also noch bevor sie auf dem Förderorgan 10 oder 10a der Blasstrecke 7,7a abgesetzt wurden. Danach erfolgt auf der Blasstrecke der Vorschub (V) von vier Vorformlingen zwischen die oder in Richtung auf die inzwischen geöffneten Blasformhälften und der Taktzyklus beginnt von neuem. Der Unterschied besteht darin, daß in dem geradlinigen Abschnitt der Heizstrecke die die Heizorgane in enger Teilung durchlaufenden Vorformlinge auf dem Umlenkabschnitt auf einen größeren, der Teilung der Formnester in der Blasstrecke entsprechende Abstand voneinander (=Teilung) gebracht worden sind, während die Vorformlinge auf dieser Blasstrecke ihre Teilung nicht verändern, sondern sie beibehalten, weil im Falle der Heizstrecke der Umlenkradius des Förderorgans 2 kleiner als der Radius ist, den die Vorformlinge auf den Armen 4 beschreiben, während in der Blasstrecke der Umlenkradius gleich dem ist, den die von der Kette 10 getragenen Vorformlinge beschreiben. Falls gemäß der Darstellung in Fig. 1 eine Heizstrecke zwei Blasstrecken bedient, erfolgt die Übergabe der Vorformlinge von der Heizstrecke 1 auf die Blasstrecke 7 nicht in der Stillstandszeit des achten Taktes, sondern erst in der des zwölften Taktes auf der Umlenkstrecke, d.h. für den Vorschub und die Übergabe der Vorformlinge in die Formnester sowie das Blasen und Kühlen steht die doppelte Zeit zur Verfügung.

Man erkennt, daß diese System sehr flexibel ist, weil, insbesondere in der Blasstrecke, ein Takt nicht aus gleichlangen Vorschub- und Stillstandszeiten bestehen muß. Man kann z.B., um für dickwandige Hohlkörper für das Ausblasen und Abkühlen in der Blasform Zeit zu gewinnen, zwischen zwei Stillstandszeiten einen sogenannten Eilvorschub schalten, also die Stillstandszeiten verlängern, und ebenso kann man, um z.B. für die auf die Blasstrecke übernommenen Vorformlinge eine größere Abkühl- oder Ausgleichszeit vor dem Einbringen in die Blasform zu gewinnen, den Vorschub entsprechend länger machen. Bekanntlich besteht bei dem Reheat-Verfahren eine gewisse Schwierigkeit darin, die von außen auf die Oberfläche der Vorformlinge aufgebrachte Wärme über den ganzen Vorformlingsquerschnitt bis zur Innenwand gleichmäßig zu verteilen, was umso eher gelingt, je mehr die Wärme Zeit hat, sich im Querschnitt gleichmäßig auszubreiten.

Ebenso ist die Maschine nach der Erfindung hinsichtlich der Zahl und Anordnung der Blasformen sowie der Größe der Formnester flexibel, insbesondere wenn eine Heizstrecke zwei Blasstrecken bedient. So kann man z.B., in gewissen Grenze natürlich, aus den gleichen auf der Heizstrecke erwärmten Vorformlingen auf einer Blasstrecke kleinere dickwandigere und auf der zweiten Blasstrecke größere und entsprechend dünnwandigere Hohlkörper herstellen.

## Patentansprüche

1. Nach dem Reheat-Verfahren arbeitende Blasmaschine für die Herstellung von Hohlkörpern aus Kunststoff mit einer Heizstrecke für die Erwärmung von einem Vorrat entnommenen, kalten Vorformlingen, von der sie nach Erwärmung in einem größeren, dem Abstand der Blasformnester entsprechenden Abstand (Teilung) voneinander als in der Heizstrecke an eine Blasstrecke übergeben werden, in der sie in eine oder mehrere Blasformen eingeführt und in denen sie zu Hohlkörpern gewünschter Gestalt aufgeblasen, dann gekühlt und danach aus ihnen für die Aufnahme neuer Vorformlinge entnommen werden,
**dadurch gekennzeichnet**,
daß die Heiz- und die Blasstrecke (1, 7) geradlinig verlaufende, über Umlenkorgane (3,9) geführte Transportorgane (2,10) für die Vorformlinge aufweist, und daß mindestens längs einem Trum des Transportorgans (2) die Heizeinrichtungen (6) und längs einem Trum des Transportorgans (10) mindestens eine Blasform (8) angeordnet sind, daß das Transportorgan (2) der Heizstrecke (1) für die Aufnahme der Vorformlinge in enger Teilung derart seitlich abstehende Arme (4) aufweist, daß der Umlenkradius (r) des Transportorgans (2) kleiner als der Umlenkradius (R) der Dornaufnahmen auf den Armen (4) ist, und daß für die Abnahme von der Heizstrecke und Übergabe auf die Blasstrecke von gleichzeitig mehreren, aufeinander folgenden Vorformlingen zwischen einem Umlenkabschnitt der Heizstrecke und dem diesem zugewandten Abschnitt der Blasstrecke (7) ein Übergabeorgan (11) geschaltet und so gesteuert ist, daß es die Vorformlinge ergreift und auf die Blasstrecke absetzt, wenn diese auf dem Umlenkabschnitt der Heizstrecke voneinander einen dem Abstand der Blasformnester auf der Blasstrecke entsprechenden Abstand aufweisen.

2. Blasmaschine nach dem Anspruch 1,
gekennzeichnet durch eine Steuerung, die die Vorformlinge auf der Heizstrecke (1) und der Blasstrecke (7) in je aus Vorchub- und Stillstandszeit (V bzw. S) bestehenden Takten bewegt, und die Abnahme von der Heizstrecke und Übergabe auf die Blasstrecke während einer Stillstandszeit (S) erfolgt, in der mehrere Vorformlinge in gleichen Abständen auf der Umlenkstrecke der Heizstrecke stehen und gleichzeitig auf der Blasstrecke das Förderorgan (10) in der Position stillsteht, in der die Vorformlinge aufgenommen werden.

3. Blasmaschine nach den Ansprüchen 1 und 2,
gekennzeichnet durch eine Steuerung, durch die bei jedem Takt der Heizstrecke durch das Transportorgan (2) alle Vorformlinge um den gleichen Betrag, bei jedem Takt der Blasstrecke jedoch durch das Transportorgan (10) so viele Vorformlinge vorgeschoben werden, wie gleichzeitig von der Heizstrecke auf die Blasstrecke übergeben wurden.

4. Blasmaschine nach dem Anspruch 1,
dadurch gekennzeichnet, daß zu beiden Seiten der Verlängerung der Mittelebene (M) durch die Heizstrecke zwei Blasstrecken (7,7a) mit je einem Transportorgan (10,10a) und je einem zugeordneten Übergabeorgan (11,11a) vorgesehen sind.

5. Blasmaschine nach den Ansprüchen 1 und 4,
dadurch gekennzeichnet, daß die Transportorgane (10,10a) in gleicher Richtung umlaufen.

6. Blasmaschine nach den Ansprüchen 1, 4 und 5,
gekennzeichnet durch eine Steuerung, mit der jedes Übergabeorgan (11,11a) jeden zweiten Satz von auf dem Umlenkabschnitt der Heizstrecke (1) zur Übernahme bereitstehenden Vorformlingen von diesem Abschnitt abnimmt und auf das Förderorgan (10,10a) und der Blasstrecke (7,7a) übergibt.

7. Blasmaschine nach dem Anspruch 1,
dadurch gekennzeichnet, daß die Länge der von Förderorgan (2) der Heizstrecke (1) seitlich abstehenden Arme (4) bzw. der Abstand der Haltedorne (5) vom Förderorgan (2) durch den Abstand der Formnester auf der Blasstrecke (7,7a) bestimmt ist.
